Europäisches Patentamt

European Patent Office

Office européen des brevets

(19)

(11) Publication number: **0 039 862**
**B1**

(12) **EUROPEAN PATENT SPECIFICATION**

(45) Date of publication of patent specification: 05.03.86

(51) Int. Cl.⁴: **H 02 G 3/06, H 02 G 15/04**

(21) Application number: **81103334.9**

(22) Date of filing: **04.05.81**

(54) **Cable connector having a tapered sleeve insert with an extension for large diameter, metallic sheathed cable.**

(30) Priority: **08.05.80 US 147879**

(43) Date of publication of application:
**18.11.81 Bulletin 81/46**

(45) Publication of the grant of the patent:
**05.03.86 Bulletin 86/10**

(84) Designated Contracting States:
**BE CH DE FR GB LI**

(56) References cited:
**FR-A-2 181 489**
**GB-A- 989 480**
**GB-A-1 524 684**
**US-A-1 886 413**
**US-A-3 448 430**

**PROSPECTUS, bul. 2748, Mars 1963, Crouse-Hinds Company New York, US "Cable Terminators", pages 1-12**

(73) Proprietor: **THOMAS & BETTS CORPORATION**
**920 Route 202**
**Raritan New Jersey 08869 (US)**

(72) Inventor: **Allen, Michael D.**
**33303 FM 149 P.O. Box 74**
**Pinehurst, Texas 75362 (US)**
Inventor: **Pastusek, Mike J.**
**1811 Nocturne**
**Houston Texas 77055 (US)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The present invention relates to a cable connector suitable for affixing to the terminating end of a cable comprising a plurality of wires and having a metallic sheath externally scrolled with a large pitch.

Such large diameter cables are used, for example, for conducting power and/or control signals to distribution centers, motors, panel boards and numerous sundry electrical and electro-mechanical apparatus.

There are various types of metallic sheathed or jacketed cables. Some of these types have a metallic covering with an external helical of screw-like or scroll appearance of large pitch. One type of cable includes a seamless aluminum tube covered with a PVC jacket. Another one includes a rolled and welded aluminum sheath. The interlocked armoured cable includes a metal sheath which has separate parts that interlock with each other to form consecutive flexible junctions.

Cables of the above-described types vary in size typically from about 1.2 cm to about 14.0 cm. The larger of such cables have a greater pitch than the smaller ones, so that over the range of common sizes there are a great number of individual sizes and pitch dimension configurations.

Installation environments for such cables vary tremendously. That is, cables often terminate at a junction with respect to another cable or into a piece of apparatus in moist conditions, sometimes even in standing water, in sandy or extremely dusty conditions, in conditions where there may be surrounding potentially explosive gases and numerous other surrounding environmental influences. Such other influences include vibrations and cable strains introduced by pushes and pulls. A cable connector that does not properly support and protect a cable will cause premature cable failure to occur, which can result in signal shortening, power arcing and the like.

In addition, cable connectors that do not properly terminate the cable in certain potentially hazardous conditions permit an additional potential hazard to exist. For example, leakage of an adverse environmental atmosphere through the wall of an apparatus can introduce adverse conditions to the sensitive workings of engines, switches, .controls and the like. Moreover, apparatus which is potentially hazardous itself, such as in the case of motors capable of exploding when they fall, should be completely shielded at the wall of the apparatus so as to prevent personnel injuries and injury to other apparatus in the event of such an explosion.

Therefore, it may be seen that for various reasons, cable connectors of large diameter, metallic sheathed or jacketed cables are made to insure a tight fit around the cable, a grounded connection with regard the sheath or jacket to insure against arcing, and a tight fit with respect to the apparatus wall or body part through which the cable enters via the connector.

Furthermore, suitable cable connectors are also made so that they properly support the cables with which they are used to prevent wear that would otherwise be caused by cable droop, vibration or longitudinal strains.

In the past therefore have been used cable connectors including a sleeve having a central bore with internal threads for being matingly threaded over the externally threaded end of the cable sheath, said sleeve having an entrance end and an egressing end,

a terminator body having a receiving end with a tapered central bore for internally receiving said sleeve with a close, interfering tolerance,

an egressing end with a central bore of smaller dimension than the external diameter of the egressing end of said sleeve through which the wires from the cable egress, the central bore of said egressing end accommodating therein said extension of said sleeve,

said entrance end of said terminator body being externaly threaded,

a compression gland having a central opening slightly larger than the sheath and having a surface for pressing against said chamfered entrance ends of said sleeve and of said terminator body, and

a gland nut adapted to screw onto the external threads of said entrance end of said terminator body and at least partially longitudinally internally accommodating said gland so that tightening of said gland nut securely presses said gland against the sheath.

Such connectors are known e.g. from US—A—4348430, GB—A—899480 and from the bulletin No. 2748 of CROUSE-HINDS.

However, these connectors have still certain disadvantages. E.g. the connector according to US—A—3448430 has the drawback that it does not provide a proper sealing of the cable to the main body part of the connector. This is because in this connector the grommet is pressed against the sleeve or groundring only from the inner side, so that the outer side of the splitted groundring is in no sealing contact with the terminator body. Furthermore the cable sheath is held only by the pressing contact of the grommet which results in the effect that the cable can be pulled out of the connector. Furthermore this connector requires a lot of parts which means that for each cable size are required different fitting parts. On the other hand the connector according to GB—A—98 94 80 in which the sleeve or adapter is provided with internal threads needs to be sealed to the end of the sheath by means of the layer of adhesive. This is a time-consuming and troublesome work which not easily can be done at every place. Furthermore there are still required many parts of the connector in different sizes i.e. for each cable size there are required a special size of adapter sealing ring as a minimum. The connector according to the CROUSE-HINDS prospectus has the disadvantage that a lead bushing without internal threads is used for securing the metallic sheath to the terminator body. However, since this bushing is slipped over the cable before fixing and then needs to be squeezed against the cable there is the disadvantage that the cable is easily displaced with respect to the connector, while the gland nut is screwed over the bushing. This will result in an improper connection. Furthermore since the bushing is made of lead thus gripping into the valleys of the scrolled sheath the removement of the bushing which would become necessary because of such wrong connection is a rather troublesome work.

Therefore, it is the aim of the present invention to provide an improved cable connector which avoids the above mentioned drawbacks and which provides a connector in which one size of terminator body universally accepts a wide number of sizes of different sleeves, thereby reducing the manufacturing and stocking costs for the connectors.

According to the present invention the connector is characterized in that said sleeve includes at the receiving end a frusto-conical chamfer to receive the cable end, and said sleeve includes a tapered external surface which reduces in size from the receiving end, said receiving end of said terminal body being frusto-conically chamfered contiguously with the receiving end chamfer of said sleeve, and said sleeve having an extension at the egressing end thereof for surrounding the wires egressing from the sleeve.

Preferably the gland is also pressed against the terminator body after the seating of the sleeve to seal also the annulus between the sleeve and the terminator body.

Furthermore it is preferable that the internal threads of that sleeve are slightly shallower than the external threads of that cable sheath.

The connector according to the present invention has the advantage that the full range of sizes for accommodating the full range of cable sheath in common usage may be provided by relatively few sizes of terminator bodies with sleeves of different sizes and configurations.

The sleeve is secured onto the sheath in such a manner to resist loosening because of vibration or the like by special configuration of the internal threads therein. The threads are flat and shallower than are the turns on the cable sheath, except for the last turn, so as to permit slight squeezing of the sheath when the sleeve is screwed thereover. The flat thread configuration of the sleeve also permits such sleeve to accommodate a range of pitches of sheath turns. Further, there is a separating flat portion between the threads in the sleeve to bite into the corresponding slightly rounded grooves in the sheath. This separating flat portion can also be tapered for ease of connecting onto a fuller range of scroll sizes.

Alternate sleeves of the same external dimension as the sleeve for fittng onto a first cable, but having an internal bore of different dimension and thread size of configuration, permits the terminator body and gland nut to be used with one or more sleeves. If there is a wide variation in acccommodating cable sizes between one sleeve and another, differently sized compression glands would be used to be compatible therewith.

Finally, the terminator body that is suitable for receiving a sleeve with an extension is also suitable for receiving a sleeve without one, further providing diversified use of the component parts of the connector.

Brief Description of the Drawings

So that the manner in which the above-recited features, advantages and objects of the invention, as well as others which will become apparent, are attained and can be understood in detail, more particular description of the invention briefly summarized above may be had by reference to the embodiments thereof which are illustrated in the appended drawings, which drawings form a part of this specification. It is to be noted, however, that the appended drawings illustrate only preferred embodiments of the invention.

In the Drawings

Fig. 1 is a cross-sectional view of a first embodiment of the present invention, the embodiment including a tapered sleeve with an extension of representative configuration for accommodating a cable having an externally threaded sheath configuration.

Fig. 2 is a partial cross-section view of an alternate sleeve embodiment for accommodating a cable of second configuration in the terminator body shown in Fig. 1.

Fig. 3 is an enlarged partial cross-sectional view of the threaded structure of the sleeve with respect to the thread structure of a metallic sheath accommodated therein in accordance with the present invention.

Description of the Preferred Embodiments

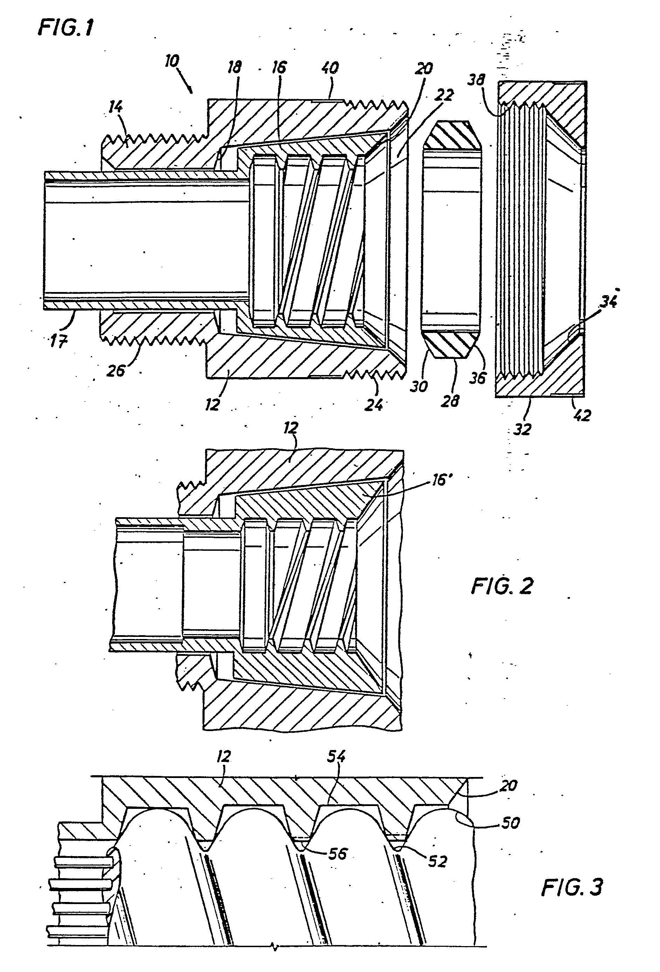

Now referring to the drawings, and first to Fig. 1, a preferred embodiment of the present invention is shown for terminating an armoured or similar metallic sheathed cable (not shown). Typically, such a cable encloses a plurality of base or independently insulated conductor wires, noninsulated wires or a combination thereof which extend from the connector while the sheath terminates therein. The wires may be further packaged with core binder and fillers. The exact configuration of the packet of wires is not germane as a limitation of the present invention. The sheath of the cable is sometimes additionally covered by a PVC or other outer covering material. In any event, the sheath has an outer or external helical screw-threaded appearance and it is with respect to such appearance that the connectors are designed to operate according to the description hereinbelow.

The external diameter of typical sheath sizes of the configuration with which the connector is designed to operate run from just under 1,2 cm to about 14,0 cm. For a 1,2 cm O.D. sheath, the pitch of the helical screw-like sheath is about 0,6 cm. For the 14 cm O.D. sheath, the pitch of the helical screw-like sheath is about 2 cm. For purposes herein, such cables are referred to as large- diameter cables and such screw-thread dimension are referred to as being of large pitch.

The cable connector or terminator shown in Fig. 1 includes a terminator body 10 having an enlarged receiving end 12 and a smaller egressing end 14. The receiving end is centrally bored for internally receiving a sleeve 16, described more fully below. The sleeve is internally bored and threaded for matingly accommodating the external thread-like end of an accommodated cable sheath.

The external surface of sleeve 16 is conically tapered with respect to its central axis from its ingressing end to its egressing end. Receiving end 12 of terminator body 10 is centrally bored so as to accommodate therein the conically tapered sleeve with very close, interfering tolerance. Preferably, the taper of the bore is slightly greater than the external taper of the sleeve so that the sleeve, when it is seated, is actually press fitted into the bore of receiving end 10. It should be noted that the bore of the terminator body extends past the sleeve, the taper of the sleeve contacting the taper of the body bore to positively seat the sleeve into the body.

The egressing end of the terminator body has a smaller internal diameter than the egressing end of its tapered receiving end so that an internal shoulder 18, preferably at an angle of about 30 degrees, is presented to permit the wires extending from the end of the cable to easily slide through the bore of the egressing end without difficulty.

Sleeve 16 also includes an extension 17 connected to the small tapered end of the threaded section. Extension 17 is typically thin walled and has a central bore through which the wires extending from the end of the cable sheath pass. The outside dimension of the extension is small enough that it fits within the bore of egressing end 14 of the terminator body.

Sleeve 16 is chamfered at entrance face 20 so as to present a frusto-conical surface to readily position an inserted cable end. The longitudinal length of receiving end 12 of the terminator is slightly greater than the longitudinal dimension of sleeve 16 and presents a frusto-conical face surface 22 which is contiguous with face 20 of sleeve 16.

Receiving end 12 is externally threaded with threads 24 so as to permit a gland nut, described hereinafter, to be screwed thereover from the entrance face direction.

Egressing end 14 is externally threaded with threads 26 to permit securing into a wall or barrier or to be placed through an opening and permit an installation nut to secure the terminator in place.

Compression gland 28, typically made of neoprene rubber, includes a face 30 which positions with and aligns partially opposite each face 20 and face 22 of sleeve 16 and receiving end 12 of the terminator body, respectively. The gland is preferably symmetrical to include a face 36 which is complementary to face 30 and on the opposite side thereof. The internal bore opening of gland 28 is just large enough to fit over the external diameter of the cable inserted into the sleeve 16.

Gland nut 32 includes a central bore with an internal frusto-conical facing surface 34 for accommodating with mating surface 36 of gland 28. The internal dimension of the main part of the bore fits over the gland in a cup-like fashion and includes internal threaded portion 38 thereof adapted to be screwed into threads 24 of the terminator body.

Terminator body 10 is knurled or otherwise threaded at surface 40 adjacent threads 24 so as to permit gripping with a wrench or other suitable device. Likewise, the external surface of the gland nut 32 is knurled or otherwise treated along at least a part of its external surface at surface 42 to permit easy gripping with a wrench or other suitable device for tightening purposes.

The preferred fit of gland 28 with respect to sleeve face 20 and body face 22 is such that the initial contact of the gland makes higher pressure against face 20 than against face 22. This provides positive seating of sleeve 16 within receiving end 12, then spreading of the gland to moisture seal the annulus opening between the sleeve and the internal bore of the receiving end. As the gland further expands, it does so inwardly to squeeze against the cable. It should be noted that when the gland nut is removed after once having been tightened, a slight longitudinal jarring is required to unseat the sleeve from the receiving end of the terminator body.

The threaded portion of the sleeve is shown in a preferred embodiment in Fig. 3. For purposes of discussion the external threads of the cable sheath can be described as being rounded to present a rounded peak 50 and a rounded valley 52 between individual threads. The internal threaded surface of sleeve 16 are flat and slightly shallower than the rounded surface of the threads of the cable sheath as shown at thread 54, except for the last thread. Moreover, the individual threads of the sheath are separated or spaced apart at flats 56 so as to present fairly sharp abutting surfaces within valley curves 52 when the sleeve is screwed over the turns or threads of the cable sheath. Although there does not have to be any slope to consecutive flats 56, the slope of flats 56 can be slightly tapered (as shown by the dotted lines) to permit ease of connection over a greater range of cable scroll configurations, while assuring that at least the final turn is tightly secured both at flat 54 and flat 56.

In operation, sleeve 16 is joined to the end of the cable sheath by screwing or turning over them in thread-like fashion. Typically, the sleeve will turn over about three and one-half of the threads, although a lesser number of threads is satisfactory to complete the connection. In any event, as the sleeve is turned over the cable sheath, the rounded portions of the cable sheath do not quite come into contact with flats 54. Since the sleeve accommodates to a range of scrolls, the peak of the scroll may not be centered respectively with regard to flats 54. At the same time, the abutting surfaces of flats 56 score into the surface of the cable sheath to make a secure connection. The sheath normally is turned so that it longitudinally terminates with the last thread of the sleeve immediately before the individual wires from the cable egress therefrom. This last turn has a flat of slightly shallower dimension to effectively bind on the cable scroll. To ensure that the sleeve does not screw on too far, the bore of the sleeve at its exit is preferably made to be reduced even further compared to the bore dimension at least of the flats between the threads.

The area which exists on either side of the center point within the threaded portion of the sleeve permits a range of accommodated sheath pitch dimensions to be received. That is, since only a few end turns are screwed into the sleeve such a sleeve thread configuration will accommodate a range of sleeve thread pitch dimensions.

The gland is then squeezed by tightening of the gland nut so that it presses both longitudinally against the faces of the terminator body and of the sleeve, and radially inward against the cable sheath, as hereinabove described. The wires extending from the cable egress through the egressing end of the connection so that their individual connection scan be completed.

The extension end of the sleeve may be filled from the exit end thereof via a conventional pump-type grease gun or otherwise with a putty and which is a flame and explosion retardant flowable or plasticized compound. Typically, this can be thought of as a semi-liquid rubber that hardens in place. It may be inserted from the extension end or through a port (not shown) located in the vicinity where the extension joins the main body of the sleeve to permit the compound to flow in the area of the extension as well as sealing the end of the cable sheath. Other appropriate sealing compounds can be used either for the same purpose or to merely prevent gas, dust, moisture or the like environment from contaminating the internal wires of the cable.

Now referring to Fig. 2, please note that the external dimension of sleeve 16' is identical with that of sleeve 16 shown in Fig. 1. However, the internal bore dimension is somewhat smaller than the internal dimension of the sleeve shown in Fig. 1 so as to accommodate a cable sheath of smaller size. Such a smaller size may include a threaded portion of different configuration than that shown for the sleeve in Fig. 1, as well. Therefore, the screw pitch of the internal sleeve screws can be made to be less than the pitch for the larger internal sleeve size. It will be seen that the remainder portion of the terminator is the same as that described for the combination illustrated in Fig. 1. However, it may be that the difference in accommodated cable sheath sizes is such as to require a different compression gland, that is, one which has a smaller bore opening than gland 28, so as to accomplish the desired connection with regard the to sheath. Small variations in size would not matter; however, a deviation of some difference would require an alternate gland.

Extension 17 of the Fig. 2 sleeve would initially be a thicker wall than the extension of the Fig. 1 embodiment; however, there is no need for a thicker extension wall, so it soon reduced to the same wall dimension as for the Fig. 1 embodiment.

It may be seen that additional sleeves having different bore dimension and thread configurations may be used so as to accommodate yet additional cable sheaths so long as the external dimension of the sleeve can still be accommodated in the manner shown for the sleeves illustrated in Fig. 1 and Fig. 2 in the same terminator body. Additional glands may likewise be required for the various alternate sleeves.

It is apparent that in manufacturing, sleeves and the terminator bodies are made so that one size of terminator body universally accepts a wide number of sizes of different sleeves, thereby reducing the manufacturing and stocking costs involved in manufacturing the connectors in the manner described compared with equivalent costs for conventional connectors not having such sleeves. The full range of sizes for accommodating the full range of cable sheaths in common usage may be provided by relatively few sizes of terminator bodies with sleeves of different sizes and configurations being much larger in number to accommodate to the full ranges. However, even a single sleeve with the flat threads hereinbefore described will accommodate a range of pitch dimensions for the few turns that are normally involved in making a connection. Moreover, it may be seen that a sleeve, before it is tightened, permits an installation where a union part has previously been needed.

Furthermore, it is also apparent that the terminator body can accommodate a sleeve that does not have an extension as well as one that does, making the terminator body a universal component part for both kinds of connectors.

While particular ebodiments of the invention have been shown and described, it will be understood that the invention is not limited thereto, since many modifications may be made and will become apparent to those skilled in the art.

**Claims**

1. A cable connector suitable for affixing to the terminating end of a cable comprising a plurality of wires and having a metallic sheath externally scrolled with a large pitch, said connector including

a sleeve (16) having an internal bore with internal threads for being matingly threaded over the externally threaded end of the cable sheath, said sleeve having a receiving end and an egressing end,

a terminator body (10) having a receiving end (12) with a tapered central bore for internally receiving said sleeve (16) with a close, interfering tolerance,

an egressing end with a central bore of smaller dimension than the external diameter of the egressing end of said sleeve through which the wires from the cable egress, the central bore of said egressing end accommodating therein an extension (17) of said sleeve,

said receiving end (12) of said terminator body being externally threaded (26),

a compression gland (28) having a central opening slightly larger than the sheath and having a surface (30) for pressing against chamfered entrance ends (20, 22) of said sleeve (16) and of said terminator body (10) and

a gland nut (32) adapted to screw onto the external threads (24) of said entrance end (12) of said terminator body (10) and at least partially longitudinally internally accommodating said gland (28) so that tightening of said gland nut (32) securely presses said gland (28) against the sheath, said connector being characterized in that said sleeve (16) includes at the receiving. end a frusto-conical chamfer (20) to receive the cable end, and said sleeve (16) includes a tapered external surface which reduces in size from the receiving end, said receiving end of said terminator body being frusto-conically chamfered (22) contiguously with the receiving end chamfer (20) of said sleeve, and said sleeve having an extension (17) at the egressing end thereof for surrounding the wires egressing from the sleeve.

2. A cable connector in accordance with claim 1, characterized in that the taper angle of said tapered central bore of said body (10) is slightly larger than the external surface of the sleeve (16) to form a press fit as the sleeve seats in to its use position.

3. A cable connector in accordance with any one of claims 1 or 2 characterized in that said terminator body (10) includes a tapered bore (18) between the tapered bore of said receiving end (12) and the central bore of said egressing end (14).

4. A cable connector in accordance with any one of the claims 1 to 3 characterized in that said gland (28) presses said sleeve (16) with respect to said terminator body (10) to secure said sleeve (16) against relative movement therewith.

5. A cable connector in accordance with claim 4, characterized in that said gland (28) also presses against said terminator body (10) following the seating of said sleeve (16) to seal the annulus between said sleeve (16) and said terminator body (10).

6. A cable connector in accordance with any one of the claims 1 to 5, characterized in that said egressing end (14) of said terminator body (10) is externally threaded.

7. A cable connector in accordance with any one of the claims 1 to 6, characterized in that the internal threads (54) of said sleeve are squared to be broader in cross section than the external threads of said cable sheath, whereby said sleeve is adapted to receive the end of externally threaded metallic sheaths over a range of pitches.

8. A cable connector in accordance with claim 4, characterized in that the internal threads of said sleeve are slightly shallower than the external threads of said cable sheath.

9. A cable connector in accordance with claim 4, characterized in that contiguous internal threads (54) of said sleeve (16) are dimensionally spaced slightly apart, thereby presenting sharply abutting thread corners (56) into the threads of the sheath.

10. A cable connector in accordance with claim 9, characterized in that said sharply abutting corners (56) form a slight taper.

11. A cable connector in accordance with any one of the claims 1 to 10, characterized in that said sleeve (16) is of less corrosive resistant material than said terminator body (10) and said gland nut (28).

12. A cable connector in accordance with any one of the claims 1 to 11, characterized in that said extension (17) is a thin wall.

13. A cable connector as claimed in claim 1, characterized in that said extension (17) of said sleeve (16) forms a chamber for receipt of a sealing material therein for disposition about said cable conductors.

**Patentansprüche**

1. Kabelverbinder zur Befestigung am Abschlußende eines Kabels mit einer Vielzahl von Drähten und einer metallischen Hülle, die an der Außenseite spiralig mit einer hohen Steigung ausgestaltet ist, wobei der Verbinder aufweist eine Hülse (16) mit einer Zentralbohrung mit Innengewinde, welches anliegend über das außen mit Spiralen versehene Ende der Kabelhülle geschraubt wird, wobei die Hülse ein Aufnahmeende und ein Austrittsende aufweist,

einen Auschlußkörper (10) mit einem Aufnahmeende (12) mit einer konischen Zentralbohrung zum Aufnehmen der Hülse (16) darin mit enger, gegenseitiger Passung,

ein Austrittsende mit einer Zentralbohrung mit engerem Durchschnitt, als der Außendurchmesser des Austrittsendes der Hülse, durch welche die Drähte des Kabels hindurchtreten, wobei die Zentralbohrung des Austrittsendes eine Verlängerung (17) der Hülse in sich aufnimmt, wobei das Aufnahmeende (12) des Abschlußkörpers mit einem Außengewinde (26) versehen ist,

eine Kompressionsdichtung (28) mit einer Zentralöffnung, die ein wenig größer als die Hülle ist und eine Oberfläche (30) aufweist, zum Anpressen gegen die abgeschrägten Eintrittsenden der Hülse (16) und des Abschlußkörpers (10) und eine Überwurfmutter (32), die auf das Außengwinde (24) des Eintrittsendes (12) des Abschlußkörpers (10) aufgeschraubt werden kann und zumindest teilweise in Längsrichtung die Dichtung (28) innen aufnimmt, so daß durch ein Anziehen Überwurfmutter (32) die Dichtung (28) fest gegen die Hülle gepreßt wird, dadurch gekennzeichnet, daß die Hülse (16) am Aufnahmeende eine kegelstumpfförmige Abschrägung (20) aufweist zum Aufnehmen des Kabelendes, und daß die Hülse (16) eine konische äußere Fläche aufweist, die sich vom Aufnahmeende her verjüngt, wobei das Aufnahmeende des Abshlußkörpers kegelstumpfförmig abgeschrägt (22) ist anschließend an die Abschrägung (20) des Aufnahmeendes der Hülse, und daß die Hülse an ihrem Austrittsende eine Verlängerung (17) aufweist, um die aus der Hülse austretenden Drähte zu umgeben.

2. Kabelverbinder nach Anspruch 1, dadurch gekennzeichnet, daß der Neigungswinkel der konischen Zentralbohrung des Körpers (10) etwas größer ist als der der Außenfläche der Hülse (16), um eine Preßpassung zu bilden, wenn die Hülse sich in ihre Betriebslage einlegt.

3. Kabelverbinder nach Anspruch 1 oder 2, dadurch gekennzeichnet, daß der Abschluskörper (10) eine konische Bohrung (18) aufweist zwischen der konischen Bohrung des Aufnahmeendes (12) und der Zentralbohrung des Austrittsendes (14).

4. Kabelverbinder nach einem der Aunprüche 1 bis 3, dadurch gekennzeichnet, daß die Dichtung (28) die Hülse (16) zum Abschlußkörper (10) drückt, um die Hülse (16) gegen Relativbewegungen dagegen zu sichern.

5. Kabelverbinder nach Anspruch 4, dadurch gekennzeichnet, daß die Dichtung (28) ebenfalls gegen den Abschluskörper (10) drückt, nachdem die Hülse (16) ihren Endsitz erreicht hat, um die Ringnut zwischen der Hülse (16) und dem Abschlußkörper (10) zu dichten.

6. Kabelverbinder nach einem der Ansprüche 1 bis 5, dadurch gekennzeichnet, daß das Austrittsende (14) des Abschlußkörpers (10) ein Außengewinde trägt.

7. Kabelverbinder nach einem der Ansprüche 1 bis 6, dadurch gekennzeichnet, daß die Innengewinde (54) der Hülse kantig sind, so daß sie einen breiteren Querschnitt haben als die Außengewinde der Kabelhülle, wodurch die Hülse das Ende der metallischen spiraligen Außenhülle über mehrere Windungen aufnehmen kann.

8. Kabelverbinder nach Anspruch 4, dadurch gekennzeichnet, daß das Innengewinde der Hülse ein wenig flacher ist als die Außengewinde der Kabelhülle.

9. Kabelverbinder nach Anspruch 4, dadurch gekennzeichnet, daß nebeneinanderliegende Innenwindungen (54) der Hülse (16) in ihren Dimensionen etwas beabstandet sind, wodurch sie scharf anliegende Gewindekanten (56) für das Gewinde der Hülle aufweisen.

10. Kabelverbinder nach Anspruch 9, dadurch gekennzeichnet, daß die scharfen aliegenden Kanten (56) einen flachen Konus bilden.

11. Kabelverbinder nach einem der Ansprüche 1 bis 10, dadurch gekennzeichnet, daß die Hülse (16) aus weniger korrisionsbeständigem Material besteht als der Abschlußkörper (10) und die Überwurfmutter (28).

12. Kabelverbinder nach einem der Ansprüche 1 bis 11, dadurch gekennzeichnet, daß die Verlängerung (17) eine dünne Wandung ist.

13. Kabelverbinder nach Anspruch 1, dadurch gekennzeichnet, daß die Verlängerung (17) der Hülse (16) eine Kammer bildet zur Aufnahme eines um die Kabelleiter herum anzuordnenden Dichtungsmaterials.

**Revendications**

1. Raccord de câble, propre à être attaché à l'extrémité de terminaison d'un câble composé d'une multiplicité de fils et garni d'une gaine métallique enroulée extérieurement en hélice à grand pas, ce raccord comprenant: une douille (16) présentant une forure centrale à filets intérieurs pour être vissée jointiment sur l'extrémité extérieurement filetée de la gaine de câble, un corps termineur (10) comportant une extrémité de réception (12) qui présente une forure centrale conique pour recevoir intérieurement la douille (16) avec des tolérances étroites, une extrémité de sortie qui présente une forure centrale de plus petite dimension que le diamètre extérieur de l'extrémité de sortie de la douille à travers laquelle sortent les fils du câble, la forure centrale de cette extrémité de sortie logeant un prolongement (17) de la douille, l'extrémité de réception (12) du corps termineur étant filetée extérieurement (26); un presse-étoupe de compression (28) présentant une ouverture centrale légèrement plus grande que la gaine et comportant une surface (30) destinée à être pressée contre les extrémités de réception chanfreinées (20, 22) de la douille (16) et du corps termineur (10); et un écrou presse-étoupe (32) destiné à être vissé sur les filets extérieurs (24) de l'extrémité de réception (12) du corps termineur (10) et à recevoir intérieurement, au moins partiellement en direction longitudinale, le presse-étoupe (28) de telle manière que le serrage de cet écrou presse-étoupe (32) presse fermement le presse-étoupe (28) contre la gaine, ce raccord étant caractérisé en ce que la douille (16) comporte, à son extrémité de réception, un chanfein tronconique (20) pour recevoir l'extrémité du câble et la douille (16) comporte une surface extérieure biseautée qui diminue de diamètre à partir de l'extrémité de réception, l'extremité de réception du corps termineur étant chanfreinée en tronc de cône (22) à la suite du chanfrein (20) de l'extrémité de réception de la douille, et la douille présentant, à son extrémité de sortie, un prolongement pour entourer les fils qui sortent de la douille.

2. Raccord de câble selon.la revendication 1, caractérisé en ce que l'angle de conicité de la forure centrale conique du corps (10) est légèrement plus grand que la surface extérieure de la douille (16), de manière à former un ajustage serré tandis que la douille se place dans sa position d'utilisation.

3. Raccord de câble selon la revendication 1 ou 2, caractérisé en ce que le corps termineur (10) contient une forure conique (18) entre la forure conique de son extrémité de réception (12) et la forure centrale de son extrémité de sortie (14).

7

4. Raccord de câble selon l'une quelconque des revendications 1 à 3, caractérisé en ce que le presse-étoupe (28) presse la douille (16) par rapport au corps termineur (10) de manière à fixer la douille (16) contre un déplacement relatif.

5. Raccord de câble selon la revendication 4, caractérisé en ce que le presse-étoupe (28) exerce également une pression contre le corps termineur (10) à la suite de la mise en place de la douille (16), de manière à rendre étanche l'espace annulaire entre la douille (16) et le corps termineur (10).

6. Raccord de câble selon l'une quelconque des revendications 1 à 5, caractérisé en ce que l,extremité de sortie (14) du corps termineur (10) est filetée extérieurement.

7. Raccord de câble selon l'une quelconque des revendications 1 a`6, caractérisé en ce que les filets intérieurs (54) de la douille sont taillés à angles droits de façon à être plus larges, en section transversale, que les filets extérieurs de la gaine de câble, de telle manière que la douille puisse recevoir l'extrémité de gaines métalliques extérieurement filetées sur toute l'étendue d'une gamme de pas différents.

8. Raccord de câble selon la revendication 4, caractérisé en ce que les filets intérieurs de la douille sont un peu moins profonds que les filets extérieurs de la gaine de câble.

9. Raccord de câble selon la revendication 4, caractérisé en ce que les filets intérieurs contigus (54) de la douille (16) sont légèrement espacés dimensionnellement, présentant de ce fait des angles de filets à contact tranchant (56) dans les filets de la gaine.

10. Raccord de câble selon la revendication 9, caractérisé en ce que les angles de contact tranchant (56) forment un léger cône.

11. Raccord de câble selon l'une quelconque des revendications 1 à 10, caractérisé en ce que la douille (16) est en une matière moins résistante à la corrosion que le corps termineur (10) et l'écrou presse-étoupe (28).

12. Raccord de câble selon l'une quelconque des revendications 1 à 11, caractérisé en ce que le prolongement (17) a une paroi mince. ·

13. Raccord de câble selon la revendication 1, caractérisé en ce que le prolongement (17) de la douille (16) forme une chambre destinée à recevoir une matière d'étanchement pour être appliquée autour des conducteurs du câble.

FIG.1

FIG. 2

FIG. 3